# EUROPEAN PATENT APPLICATION

(11) **EP 3 748 419 A1**
(43) Date of publication of application: **09.12.2020**
(21) Application number: 19305735.3
(22) Date of filing: 07.06.2019
(51) Int. Cl.: G02C 7/08, G02B 27/01

(54) **ELECTRICAL CONNECTION BETWEEN ACTIVE GLASS AND EXTERNAL ELECTRONIC**

(71) Applicant: ESSILOR INTERNATIONAL, 94220 Charenton-Le-Pont (FR)
(72) Inventor: ARCHAMBEAU, Samuel, 94220 CHARENTON-LE-PONT (FR); CHAUDAT, Willy, 94220 CHARENTON-LE-PONT (FR); ESCAICH, David, 94220 CHARENTON-LE-PONT (FR); BALLET, Jérôme, 94220 CHARENTON-LE-PONT (FR)
(74) Representative: Cabinet Novitech

(57) **Abstract**

An optical lens comprising at least one glass shell, each glass shell defining a front surface, a back surface opposed to the front surface, and a side surface linking the front surface and the back surface, wherein at least one of the back surface and the front surface comprises an electrically-conductive layer,
the optical lens further comprising an electrical connector electrically connected with the or each conductive layer and adapted to be connected to an external electronic device,
the electrical connector being attached to the side surface of the or each glass shell by a conductive adhesive.

## Description

### FIELD OF THE INVENTION

The present invention relates to an optical lens comprising an electrical connector electrically connected to a conductive layer and attached by a conductive adhesive.

Additionally, the invention relates to a method of manufacturing said optical lens.

### BACKGROUND OF THE INVENTION

Usually, electrical connection between an electro-active element of the lens and the external element such as a battery or a processor is realized by using a flexible film fixed with conductive glue between the two glasses supporting the electro-active element.

Such method for electrically connecting an active glass and external electronics may provide good electrical contact bus also presents several drawback.

First, the area of the connection has to be decided prior to the assembly of the active glass, and cannot be changed after the assembling step. The assembly process of the active glass is thus rendered difficult to achieve.

Secondly, the large planar connection between the active glass and the external electronics is difficult to hide, especially when the frames of the spectacle lens comprising the active glass are thin. Such connection may thus impact the aesthetic of the spectacles or even impact the vision quality of the wearer.

Therefore, there is a need to provide an electrical connection between an active glass and external electronics that would be easy to assemble and that would be invisible or as small as possible to be hidden by the spectacle frame while strongly adhering to the active glass to avoid tearing, and allowing multiple contacts without any short circuit.

### SUMMARY OF THE INVENTION

To this end, the invention proposes an optical lens comprising at least one glass shell, each glass shell defining a front surface, a back surface opposed to the front surface, and a side surface linking the front surface and the back surface, wherein at least one of the back surface and the front surface comprises an electrically-conductive layer,
- the optical lens further comprising an electrical connector electrically connected with the or each conductive layer and adapted to be connected to an external electronic device,
- the electrical connector being attached to the side surface of the or each glass shell by a conductive adhesive.

Advantageously, the optical lens according to the invention allows minimizing the visible connection surface between the electrical connector and the conductive layer of the optical lens.

Additionally, the use of conductive adhesive in the optical lens according to the invention allows multiple contacts between the electrical connector and the conductive layer of the optical lens without any short circuit.

According to further embodiments which can be considered alone or in combination:
- the optical lens comprises at least one contact electrode extending on the side surface of each glass shell; and/or
- each contact electrode is in electrical contact with the conductive layer and with the electrical connector through the conductive adhesive; and/or
- each contact electrode comprises a metal layer or a conductive resin layer; and/or
- the conductive adhesive is an anisotropic conductive adhesive adapted to be electrically conductive in a direction sensibly perpendicular to the side surface of the glass shell of the lens and to be non-conductive in any direction sensibly tangent to the side surface of the glass shell of the lens; and/or
- the anisotropic conductive adhesive comprises an adhesive matric comprising a non-conductive material and a plurality of conductive particles dispersed in the adhesive matrix; and/or
- the adhesive matrix is reticulated and rigid; and/or
- the optical lens further comprises exactly two glass shells facing each other, one of the glass shells being a front shell and bearing the conductive layer on the back surface, the other glass shell being a back shell and bearing the conductive layer on the front surface, the front shell and the back shell defining an inner space between them, the inner space comprising an electrically controlled object placed in electrical contact with the conductive layers; and/or
- the optical object comprises an element selected from the group consisting of a liquid crystals layer, an electrochromic material layer, an electrically-controlled active lens, a spatial light modulator and a waveguide; and/or
- the electrical connectors extends only outside a space facing the conductive layer; and/or
- the optical lens has a dioptric function; and/or
- the dioptric function of the optical lens is adapted for to the prescription of a user.

Another object of the invention relates to a head mounted device comprising at least one optical lens according to the invention.

According to further embodiments which can be considered alone or in combination:
- the head mounted device comprises a frame bearing each optical lens; and/or
- each electrical connector is integrated in the frame.

The invention further relates to a method for manufacturing an optical lens according to the invention, the method comprising:
- an optical lens providing step during which at least one glass shell comprising a conductive layer on at least one of a front surface and a back surface is provided;
- an assembling step during which an electrical connector is attached to the side surface of the glass shell with a conductive adhesive, the electrical connector being electrically connected to the conductive layer through the conductive adhesive.

Advantageously, attaching the connector to the side surface of each glass shell facilitates the manufacturing process of the optical lens as it does not require to be performed during the assembling of the at least one glass shell and the conductive layer.

According to further embodiments which can be considered alone or in combination:
- the method further comprises an electrode forming step during which at least one contact electrode is formed on the side surface of the glass shell, the contact electrode being in contact with the conductive layer; the electrical connector being electrically connected to the conductive layer through each contact electrode during the assembling step; and/or
- the assembling step further comprises a conductive adhesive applying step during which the conductive adhesive is applied on the side surface of the glass shell or on the electrical connector, the matric being on a non-reticulate state; and/or
- the assembling step further comprises a matrix reticulation step during which the matrix is brought to a reticulated state, the matrix being rigid in the reticulated state.

### BRIEF DESCRIPTION OF THE DRAWINGS

Embodiments of the invention will now be described, by way of example only, and with reference to the following drawings in which:
- Figure 1 illustrates an optical lens according to an embodiment of the invention,
- Figure 2 illustrates a contact electrode of an optical lens according to an embodiment of the invention,
- Figure 3 illustrates a connection between the electrical connector and the electrically conductive layer according to an embodiment of the invention,
- Figure 4 illustrates a contact electrode of an optical lens according to an embodiment of the invention,
- Figure 5 illustrates a char-flow embodiment of the method for manufacturing an optical lens according to the invention.

### DETAILED DESCRIPTION OF PREFERRED EMBODIMENTS

The invention relates to an optical lens comprising an electrical connector electrically connected to a conductive layer and attached by a conductive adhesive.

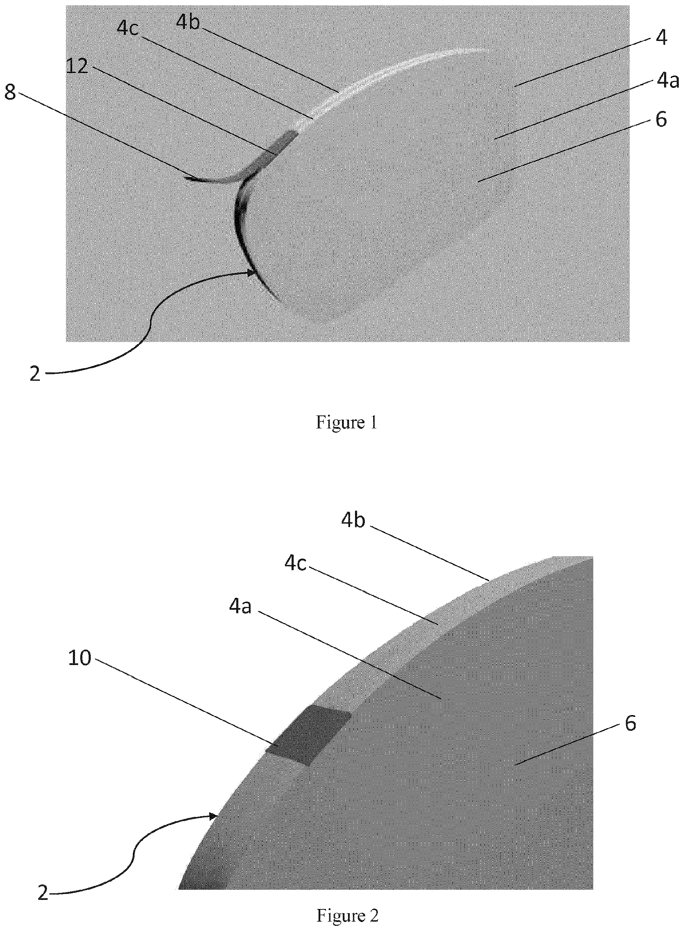

As illustrated on figure 1, the optical lens 2 comprises at least one glass shell 4. The glass shell 4 defines a front surface 4a, a back surface 4b opposed to the front surface, and a side surface 4c linking the front surface and the back surface.

The optical lens 2 may comprises a plurality of glass shells 4 arranged to face each other, and defining an inner space between each glass shells.

At least one of the front surface 4a or back surface 4b of the glass shell 4 comprises an electrically-conductive layer 6.

The electrically-conductive layer 6 may be a transparent conductive ITO disposed on at least one of the front surface 4a or back surface 4b of the glass shell 4.

The optical lens 2 further comprises an electrical connector 8 electrically connected with the or each conductive layer 6 and adapted to be connected to an external electronic device.

The electrical connector 8 may be a flexible film.

The electrical connector 8 is attached to the side surface of the or each glass shell by a conductive adhesive 12.

Advantageously, having the electrical connector 8 attached to the side surface of the glass shell allows to minimize the visible connection surface. More particularly, the connection area and the electrical connector may be more easily hidden by a spectacle frame holding the optical lens 2.

Furthermore, the utilization of a conductive adhesive 12 allows the electrical connector to adhere strongly to the glass shell to avoid tearing.

According to an embodiment of the invention, the electrical connector 8 extends only outside a space facing the conductive layer.

As represented on figure 2, the optical lens 2 may comprise at least one contact electrode 10 extending on the side surface of each glass shell. Each electrical contact electrode 10 is in electrical contact with the conductive layer of each glass shell and with the electrical connector 8 through the conductive adhesive 12.

Each glass shell may comprise a plurality of contact electrodes 10 or a continuous contact electrode on all the side surface of each glass shell.

The contact electrode 10 may be done with liquid conductive resin or vacuum deposited metal for each glass shell.

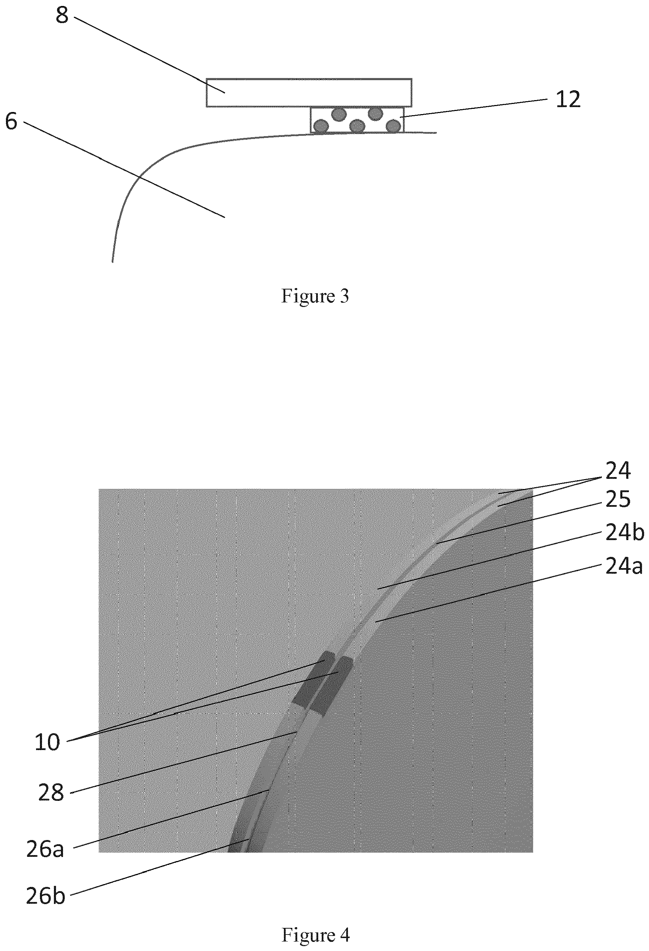

As represented on figure 3, the conductive adhesive 12 may be an anisotropic conductive adhesive adapted to be electrically conductive in a direction sensibly perpendicular to the side surface of the glass shell of the lens and to be non-conductive in any direction sensibly tangent to the side surface of the glass shell of the optical lens.

The anisotropic conductive adhesive may comprise an adhesive matrix comprising a non-conductive material, such as for instance glue or resin, and a plurality of electrically conductive particles dispersed in the adhesive matrix.

The adhesive matrix may be reticulated and/or rigid. For example, the anisotropic adhesive can be a liquid or a film and require heating or UV insolation to bond with the side surface of the glass shell and the electrical connector.

Advantageously, the utilization of an anisotropic conductive adhesive to connect the electrical connector to the conductive layer of each glass shell allows multiple connections between the electrical connector and the conductive layer of each glass shell without any short circuits.

According to an embodiment of the invention, the optical lens 2 may further comprises exactly two glass shells facing each other.

As represented on figure 4, each glass shell 24 defines a front surface, a back surface opposed to the front surface, and a side surface linking the front surface and the back surface.

One of the glass shells is a front shell 24a and bears a conductive layer 26a on the back surface. The other glass shell is a back shell 24b and bears the conductive layer 26b on the front surface.

The front surface of the glass shell 24b and the back surface of the glass shell 24a defines an inner space 25 between them. The inner space 25 comprises an electrically controlled optical object 28 place in electrical contact with the conductive layers 26a and 26b.

The electrically controlled optical object 28 may comprises an element selected from the group consisting of a liquid crystals layer, an electrochromic material layer, an electrically-controlled active lens, a spatial light modulator and a waveguide.

According to an embodiment of the invention, the optical lens 2 has an optical function. In the sense of the invention, the optical function corresponds to a function providing for each gaze direction the effect of the optical lens on the light ray passing through the optical lens.

For instance the optical function may be a dioptric function. The dioptric function corresponds to the optical lens power (mean power, astigmatism etc.) as a function of the gaze direction.

Moreover, the optical function of the optical lens may be adapted to the prescription of a wearer.

The term "prescription" is to be understood to mean a set of optical characteristics of optical power, of astigmatism, of prismatic deviation, determined by an ophthalmologist or optometrist in order to correct the vision defects of the eye, for example by means of a lens positioned in front of his eye. For example, the prescription for a myopic eye comprises the values of optical power and of astigmatism with an axis for the distance vision.

Another aspect of the invention relates to a head mounted device comprising at least one optical lens 2 according to the invention. The head-mounted device is adapted to be mounted on the head of a wearer.

According to an embodiment of the invention, the head mounted device comprises a frame bearing each optical lens 2. Each electrical connector 8 of the optical lens 2 is integrated in the frame.

The invention further relates to a method for manufacturing an optical lens 2 according to the invention.

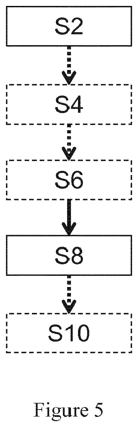

As illustrated on figure 5, the method for manufacturing an optical lens 2 according to the invention comprises a step S2 of providing an optical lens.

During the providing step S2, at least one glass shell is provided. The at least one glass shell defines a front surface, a back surface opposed to the front surface, and a side surface linking the front surface and the back surface. The at least one glass shell comprises a conductive layer on at least one of its front or back surface.

The method for manufacturing an optical lens further comprises a step S8 of assembling the optical lens.

During the assembling step S8, an electrical connector is attached to the side surface of the glass shell. The electrical connector is attached to the glass shell with a conductive adhesive. The electrical connector is electrically connected to the conductive layer place on a surface of the glass shell through the conductive adhesive.

The method for manufacturing an optical lens may further comprise a step S4 of forming an electrode.

During the electrode step forming S4, at least one contact electrode is formed on the side surface of the glass shell. The contact electrode is in electrical contact with the conductive layer placed on at least one surface of the glass shell. The electrical connector is electrically connected to the conductive layer of the glass shell through each contact electrode during the assembling step S8.

The method for manufacturing an optical lens may further comprise a step S6 of applying a conductive adhesive.

During the conductive adhesive applying step S6, the conductive adhesive is applied on the side surface of the glass shell of the optical lens, or on the electrical connector. The conductive adhesive comprises a matrix in a non-reticulated state.

The method for manufacturing an optical lens may further comprise a step S10 of reticulating the matrix.

During the matrix reticulation step S10, the matrix of the conductive adhesive assembled to the conductive layer of the glass shell and the electrical connector is brought to a reticulated state. The matrix of the conductive adhesive is rigid in the reticulated state.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An optical lens comprising at least one glass shell, each glass shell defining a front surface, a back surface opposed to the front surface, and a side surface linking the front surface and the back surface, wherein at least one of the back surface and the front surface comprises an electrically-conductive layer,
the optical lens further comprising an electrical connector electrically connected with the or each conductive layer and adapted to be connected to an external electronic device,
the electrical connector being attached to the side surface of the or each glass shell by a conductive adhesive.

2. The optical lens according to claim 1, wherein the optical lens comprises at least one contact electrode extending on the side surface of each glass shell, each contact electrode being in electrical contact with the conductive layer and with the electrical connector through the conductive adhesive.

3. The optical lens according to claim 2, wherein each contact electrode comprises a metal layer or a conductive resin layer.

4. The optical lens according to any of the preceding claim, wherein the conductive adhesive is an anisotropic conductive adhesive adapted to be electrically conductive in a direction sensibly perpendicular to the side surface of the glass shell of the lens and to be non-conductive in any direction sensibly tangent to the side surface of the glass shell of the lens.

5. The optical lens according to claim 4, wherein the anisotropic conductive adhesive comprises an adhesive matrix comprising a non-conductive material and a plurality of conductive particles dispersed in the adhesive matrix.

6. The optical lens according to claim 5, wherein the adhesive matrix is reticulated and rigid.

7. The optical lens according to any of the preceding claim, wherein the optical lens comprises exactly two glass shells facing each other, one of the glass shells being a front shell and bearing the conductive layer on the back surface, the other glass shell being a back shell and bearing the conductive layer on the front surface, the front shell and the back shell defining an inner space between them, the inner space comprising an electrically controlled object placed in electrical contact with the conductive layers.

8. The optical lens according to claim 7, wherein the electorally controlled optical object comprises an element selected from the group consisting of a liquid crystals layer, an electrochromic material layer, an electrically-controlled active lens, a spatial light modulator and a waveguide.

9. The optical lens according to any of the preceding claim wherein the electrical connector extends only outside a space facing the conductive layer.

10. The optical lens according to any of the preceding claim, wherein the optical lens has a dioptric function, for example adapted to the prescription of a user.

11. A head-mounted device comprising at least one optical lens according to any of the preceding claim.

12. The head-mounted device according to claim 11, wherein the head mounted device comprises a frame bearing each optical lens, each electrical connector being integrated in the frame.

13. A method for manufacturing an optical lens according to any of the preceding claim, the method comprising:
- an optical lens providing step, during which at least one glass shell comprising a conductive layer on at least one of a front surface and a back surface is provided;
- an assembling step during which an electrical connector is attached to the side surface of the glass shell with a conductive adhesive, the electrical connector being electrically connected to the conductive layer through the conductive adhesive.

14. The method according to claim 13, wherein the method further comprises:
- an electrode forming step, during which at least one contact electrode is formed on the side surface of the glass shell, the contact electrode being in electrical contact with the conductive layer, the electrical connector being electrically connected to the conductive layer through each contact electrode during the assembling step.

15. The method according to any of claims 13 or 14, wherein the assembling step further comprises:
- a conductive adhesive applying step during which the conductive adhesive is applied on the side surface of the glass shell or on the electrical connector, the matrix being in a non reticulated state, and
- a matrix reticulation step during which the matrix is brought to a reticulated state, the matrix being rigid in the reticulated state.
